# EUROPÄISCHE PATENTANMELDUNG

(11) **EP 4 389 503 A1**
(43) Veröffentlichungstag der Anmeldung: **26.06.2024**
(21) Anmeldenummer: 23216533.2
(22) Anmeldetag: 14.12.2023
(51) Int. Cl.: B60L 53/16, H01R 13/502, H01R 13/514, H01R 13/52

(54) **STECKVERBINDERTEIL FÜR EIN LADESYSTEM ZUM AUFLADEN EINES ELEKTROFAHRZEUGS**

(30) Priorität: 21.12.2022 BE 202206055
(71) Anmelder: Phoenix Contact e-Mobility GmbH, 32816 Schieder-Schwalenberg (DE)
(72) Erfinder: KUCKUCK, Carsten, 31785 Hameln (DE); Neumann, Edmund, 31789 Hameln (DE); Stamm, Simon, 33100 Paderborn (DE)
(74) Vertreter: Meyer-Graefe, Karsten

(57) **Zusammenfassung**

Ein Steckverbinderteil (3) eines Ladesystems zum Aufladen eines Elektrofahrzeugs (4) ist entlang einer Steckrichtung (E) mit einem Gegensteckverbinderteil (5) steckend verbindbar und umfasst ein Gehäuseteil (304), ein mit dem Gehäuseteil (304) verbundenes Trägerelement (32), zumindest einen an dem Trägerelement (32) angeordneten elektrischen Steckkontakt (31A, 31B) zum steckenden Verbinden mit einem Gegenkontakt (51A, 51B) des Gegensteckverbinderteils (5) und eine an dem Trägerelement (12) angeordnete Temperatursensorbaugruppe (33A, 33B), die ein mit dem zumindest einen elektrischen Steckkontakt (31A, 31B) in Wirkverbindung stehendes Temperatursensorelement (330) zum Messen einer Temperatur an dem zumindest einen elektrischen Steckkontakt (31A, 31B) aufweist. Das Temperatursensorelement (330) weist einen ersten Eingriffsabschnitt (333) auf, der formschlüssig mit einem zweiten Eingriffsabschnitt (313) des zumindest einen elektrischen Steckkontakts (31A, 31B) in Eingriff steht, sodass der zumindest eine elektrische Steckkontakt (31A, 31B) axial entlang der Steckrichtung (E) relativ zu dem Trägerelement (32) festgelegt ist.

## Beschreibung

Die Erfindung betrifft ein Steckverbinderteil eines Ladesystems zum Aufladen eines Elektrofahrzeugs nach dem Oberbegriff des Anspruchs 1 sowie ein Ladesystem zum Aufladen eines Elektrofahrzeugs.

Ein derartiges Steckverbinderteil ist steckend entlang einer Steckrichtung mit einem Gegensteckverbinderteil verbindbar und umfasst ein Gehäuseteil, ein mit dem Gehäuseteil verbundenes Trägerelement und zumindest einen an dem Trägerelement angeordneten elektrischen Steckkontakt zum steckenden Verbinden mit einem Gegenkontakt des Gegensteckverbinderteils. An dem Trägerelement ist eine Temperatursensorbaugruppe angeordnet, die ein mit dem zumindest einen elektrischen Steckkontakt in Wirkverbindung stehendes Temperatursensorelement zum Messen einer Temperatur an dem zumindest einen elektrischen Steckkontakt aufweist.

Ein solches Steckverbinderteil kann als Steckverbinderteil auf Seiten des Ladekabels, auch bezeichnet als Ladestecker, oder Steckverbinderteil auf Seiten des Fahrzeugs, auch bezeichnet als Ladebuchse oder Ladedose, ausgebildet und an einem Ladekabel auf Seiten einer Ladestation oder an einem Elektrofahrzeug angeordnet sein. Mit einer Ladebuchse kann ein an einem Ladekabel angeordneter Ladestecker verbunden werden, um auf diese Weise eine elektrische Verbindung zwischen einer Ladestation und dem Elektrofahrzeug herzustellen und das Elektrofahrzeug elektrisch aufzuladen.

Im Bereich der Elektromobilität ist wünschenswert, Elektrofahrzeuge schnell und effizient aufzuladen, um Ladezeiten und damit verbundene Fahrtunterbrechungszeiten zu reduzieren. Um im Rahmen eines Schnellladevorgangs ein schnelles Aufladen eines Elektrofahrzeugs zu ermöglichen, werden hohe Ladeleistungen verwendet, verbunden mit großen Ladeströmen, zum Beispiel mit einer Stromstärke von 700 A oder gar darüber. Zum Aufladen von Nutzfahrzeugen sind gar Stromstärken bis hin zu 3000 A denkbar.

An Steckkontakten eines Steckverbinderteils, über die ein Ladestrom übertragen wird, und Bauteilen, die mit den Steckkontakten verbunden sind, kann es im Betrieb zu Erwärmung kommen. Normativ ist hierbei vorgeschrieben, dass eine Erwärmung an Bauteilen eines Steckverbinderteils begrenzt sein muss und beispielsweise 50 K nicht übersteigen darf. Eine übermäßige Erwärmung an Bauteilen des Steckverbinderteils ist daher auszuschließen.

Um im Betrieb des Steckverbinderteils in einem Ladesystem zum Aufladen eines Elektrofahrzeugs die Temperatur insbesondere im Bereich der Steckkontakte des Steckverbinderteils zu überwachen, ist vorzugsweise solchen Steckkontakten, die als Lastkontakte zum Übertragen eines Ladestroms zum Aufladen eines Elektrofahrzeugs, dienen, eine Temperatursensorbaugruppe zugeordnet, die dazu ausgestaltet ist, die Temperatur an dem zugeordneten Steckkontakt zu erfassen und somit eine Überwachung einer Temperaturveränderung an dem Steckkontakt zu ermöglichen. In Abhängigkeit von der Temperaturüberwachung kann der Betrieb des Steckverbinderteils gesteuert werden, um zum Beispiel bei einer übermäßigen Temperaturerhöhung einen Stromfluss und damit eine weitere Temperatursteigerung zu unterbinden.

Bei einem Steckverbinderteil eines Ladesystems zum Aufladen eines Elektrofahrzeugs können bei einem Steckvorgang zum steckenden Verbinden des Steckverbinderteils mit dem zugeordneten Gegensteckverbinderteil erhebliche Druck- und Zugkräfte an dem Steckverbinderteil und den an dem Steckverbinderteil angeordneten Steckkontakten auftreten. Hierbei ist sicherzustellen, dass eine Belastung an den Steckkontakten den festen Halt der Steckkontakte an dem Steckverbinderteil nicht beeinträchtigt.

Eine Bauform eines Steckverbinderteils in Form eines Ladesteckers an einem Ladekabel ist beispielsweise aus der DE 10 2018 108 181 A1 bekannt, bei der Steckkontakte an Steckabschnitten des Steckverbinderteils angeordnet sind.

Die EP 3 446 369 B1 beschreibt ein Steckverbinderteil in Form eines Ladesteckers an einem Ladekabel, bei dem Abschnitte von Steckkontakten in einem sogenannten Bechergehäuse aufgenommen sind.

Aufgabe der vorliegenden Erfindung ist es, ein Steckverbinderteil zur Verfügung zu stellen, das in kostengünstiger Weise eine zuverlässige Festlegung des zumindest einen Steckkontakts an dem zugeordneten Trägerelemente Steckverbinder Teils ermöglicht.

Diese Aufgabe wird durch einen Gegenstand mit den Merkmalen des Anspruchs 1 gelöst.

Demnach weist das Temperatursensorelement einen ersten Eingriffsabschnitt auf, der formschlüssig mit einem zweiten Eingriffsabschnitt des zumindest einen elektrischen Steckkontakts in Eingriff steht, sodass der zumindest eine elektrische Steckkontakt axial entlang der Steckrichtung relativ zu dem Trägerelement festgelegt ist.

Das Trägerelement des Steckverbinderteils dient zum Tragen des zumindest einen Steckkontakts. Der Steckkontakt verwirklicht beispielsweise einen Lastkontakt zum Übertragen eines Ladestroms in Form eines Gleichstroms, sodass im Betrieb große Ströme über den Steckkontakt fließen können und entsprechend eine hohe Spannung an dem Steckkontakt anliegen kann.

Der zumindest eine elektrische Steckkontakt ist mit dem Trägerelement verbunden. Das Trägerelement ist demgegenüber mit dem Gehäuseteil des Steckverbinderteils verbunden, sodass über das Trägerelement der zumindest eine Steckkontakt an dem Gehäuseteil positioniert ist. Das Trägerelement besteht aus einem elektrisch isolierenden Material und ist fest mit dem Gehäuseteil verbunden, beispielsweise verschraubt.

Eine axiale Fixierung des zumindest einen elektrischen Steckkontakts relativ zu dem Trägerelement erfolgt hierbei über das Temperatursensorelement der Temperatursensorbaugruppe, das einen ersten Eingriffsabschnitt ausbildet, der mit einem zweiten Eingriffsabschnitt des zumindest einen elektrischen Steckkontakts in Eingriff steht. Über das Temperatursensorelement der Temperatursensorbaugruppe wird somit zum einen eine Temperaturmessung an dem zumindest einen elektrischen Steckkontakt ermöglicht. Zum zweiten dient in synergetischer Doppelverwendung das Temperatursensorelement der Temperatursensorbaugruppe auch zur mechanischen Fixierung des zumindest einen elektrischen Steckkontakts relativ zu dem Trägerelement, indem das Temperatursensorelement einen formschlüssigen Eingriff mit dem zumindest einen elektrischen Steckkontakt herstellt und somit den zumindest einen elektrischen Steckkontakt axial relativ zu dem Trägerelement festlegt.

Bei dem Temperatursensorelement kann es sich beispielsweise um einen temperatursensitiven elektrischen Widerstand (Heißleiter (NTC) oder Kaltleiter (PTC) , zum Beispiel ein sogenannter PT100- oder PT-1000-Sensor) handeln, über den die Temperatur an dem zumindest einen elektrischen Steckkontakt aufgenommen werden kann. Das Temperatursensorelement ist hierbei elektrisch von dem zumindest einen elektrischen Steckkontakt getrennt, beispielsweise indem das Temperatursensorelement durch ein elektrisch isolierendes Material umspritzt und somit elektrisch isolierend eingehüllt ist.

In einer Ausgestaltung ist das Temperatursensorelement in einer Öffnung des Trägerelements angeordnet. An einer hin zu dem zumindest einen elektrischen Steckkontakt weisenden Seite des Trägerelements steht der erste Eingriffsabschnitt des Temperatursensorelements beispielsweise mit dem zugeordneten zweiten Eingriffsabschnitt des zumindest einen elektrischen Steckkontakt in formschlüssigem Eingriff. An einer dem zumindest einen elektrischen Steckkontakt abgewandten, nach außen weisenden Seiten des Temperatursensorelements können demgegenüber beispielsweise elektrische Leitungen an das Temperatursensorelement angeschlossen sein.

In einer Ausgestaltung weist die Temperatursensorbaugruppe ein Dichtungselement zum feuchtigkeitsdichten Abdichten eines Übergangs zwischen einem die Öffnung begrenzenden Randabschnitt des Trägerelements und dem Temperatursensorelement auf. Das Temperatursensorelement liegt somit feuchtigkeitsdicht in der zugeordneten Öffnung des Trägerelements ein und ist über das Dichtungselement relativ zu dem Trägerelement abgedichtet, sodass keine Feuchtigkeit durch die Öffnung hindurch in das Innere des Trägerelements eindringen kann.

In einer Ausgestaltung weist das Trägerelement zumindest eine Aufnahmekammer auf, in der ein Abschnitt des zumindest einen elektrischen Steckkontakts aufgenommen ist. Die Aufnahmekammer kann beispielsweise einen feuchtigkeitsdichten Innenraum begrenzen, in dem der Abschnitt des zumindest einen elektrischen Steckkontakts aufgenommen ist. Der zumindest eine Steckkontakt ist an dem Trägerelement somit feuchtigkeitsdicht eingefasst, sodass Feuchtigkeit nicht (ohne weiteres) in den Bereich des Abschnitts des zumindest einen elektrischen Steckkontakts gelangen kann.

Der erste Eingriffsabschnitt des Temperatursensorelements kann beispielsweise durch ein radial nach innen weisendes Vorsprungselement des Temperatursensorelements geformt sein. Der zweite Eingriffsabschnitt kann demgegenüber zum Beispiel durch eine Vertiefung, zum Beispiel in Form einer radial nach innen weisenden, in einen Schaftabschnitt des Steckkontakts eingeformten Nut, an dem jeweiligen Steckkontakt geformt sein. Mit dem Schaftabschnitt liegt der Steckkontakt zum Beispiel in einer zugeordneten Aufnahmekammer des Trägerelements ein. Durch den Eingriff der Eingriffsabschnitte ineinander ist der Steckkontakt relativ zu dem Trägerelement, beispielsweise im Inneren einer zugeordneten Aufnahmekammer, axial fixiert.

Der formschlüssige Eingriff zwischen den Eingriffsabschnitten ist insbesondere so beschaffen, dass der zumindest eine elektrische Steckkontakt in einer zugeordneten Aufnahmekammer formschlüssig entgegen einer axialen Belastung entlang der Steckrichtung fixiert ist. Durch den formschlüssigen Eingriff des Temperatursensorelements mit dem zugeordneten Steckkontakt wird der Steckkontakt axial zu dem Trägerelement festgelegt, sodass insbesondere bei einem Steckvorgang auftretende, axial wirkende Druck- und/oder Zugkräfte aufgenommen und abgeleitet werden können.

In einer Ausgestaltung weist der zumindest eine elektrische Steckkontakt einen Anschlagabschnitt auf, der zur axialen Abstützung an einem Stützabschnitt des Trägerelements anliegt. Der Anschlagabschnitt kann beispielsweise durch eine Schulter eines zylindrischen Schaftabschnitts des zumindest einen elektrischen Steckkontakts geformt sein. Der Stützabschnitt des Trägerelements kann demgegenüber beispielsweise durch eine stufenförmige Anlagefläche, zum Beispiel an einem Ende einer zylindrischen Aufnahmekammer, geformt sein, an der der Steckkontakt axial abgestützt ist. Über die axiale Abstützung können beispielsweise Zugkräfte an dem zumindest einen Steckkontakt aufgenommen und abgeleitet werden. Eine axiale Fixierung zum Aufnehmen und Ableiten von Druckkräften an dem zumindest einen Steckkontakt erfolgt demgegenüber beispielsweise vornehmlich über das Temperatursensorelement.

In einer Ausgestaltung weist das Steckverbinderteil zumindest zwei an dem Trägerelement angeordnete elektrische Steckkontakte zum steckenden Verbinden mit Gegenkontaktelementen des Gegensteckverbinderteils auf. Die zumindest zwei Steckkontakte verwirklichen insbesondere Lastkontakte und werden gemeinsam durch das Trägerelement getragen und an dem Gehäuseteil positioniert. Die Steckkontakte sind mit dem Trägerelement verbunden, das wiederum an dem Gehäuseteil des Gegensteckverbinderteils festgelegt ist.

In einer Ausgestaltung ist das Steckverbinderteil entlang einer Steckrichtung mit dem Gegensteckverbinderteil steckend verbindbar. Die zumindest zwei Steckkontakte stehen hierbei entlang der Steckrichtung von dem Trägerelement ab.

Beispielsweise ist an dem Gehäuseteil ein Steckabschnitt zum steckenden Verbinden mit dem Gegensteckverbinderteil angeordnet, wobei die zumindest zwei Steckkontakte jeweils einen Kontaktabschnitt zum elektrischen Kontaktieren mit einem zugeordneten Gegenkontaktelement des Gegensteckverbinderteils aufweisen, der im Bereich des Steckabschnitts angeordnet ist. Mit den Kontaktabschnitten stehen die Steckkontakte von dem Trägerelement vor und ragen so in den Bereich des Steckabschnitts, dass durch steckendes Verbinden des Steckabschnitts des Steckverbinderteils mit einem zugeordneten Gegensteckabschnitt des Gegensteckverbinderteils die Steckkontakte über die Kontaktabschnitte elektrisch mit den zugeordneten Gegenkontakten des Gegensteckverbinderteils verbunden werden können.

Beispielsweise liegen die Kontaktabschnitte in zugeordneten, von außen zugänglichen Öffnungen an dem Steckabschnitt ein, sodass durch steckendes Verbinden des Steckabschnitts mit dem Gegensteckverbinderteil eine elektrische Kontaktierung der Kontaktabschnitte mit Gegenkontakten hergestellt werden kann.

Die Kontaktabschnitte können beispielsweise als Kontaktbuchsen ausgestaltet sein, die mit Gegenkontaktelementen in Form von Kontaktstiften steckend in elektrische Verbindung gebracht werden können. In anderer Ausgestaltung können die Kontaktabschnitte als Kontaktstifte ausgebildet sein, die mit zugeordneten Gegenkontaktelementen in Form von Kontaktbuchsen elektrisch verbunden werden können.

In einer Ausgestaltung weist das Trägerelement eine erste Aufnahmekammer, in der ein Abschnitt eines ersten der zumindest zwei elektrischen Steckkontakte aufgenommen ist, und eine zweite Aufnahmekammer, in der ein Abschnitt eines zweiten der zumindest zwei elektrischen Steckkontakte aufgenommen ist auf. Die erste Aufnahmekammer begrenzt einen ersten feuchtigkeitsdichten Innenraum, in dem der Abschnitt des ersten der zumindest zwei elektrischen Steckkontakte aufgenommen ist. Die zweite Aufnahmekammer begrenzt einen zweiten feuchtigkeitsdichten Innenraum, in dem der Abschnitt des zweiten der zumindest zwei elektrischen Steckkontakte aufgenommen ist.

Das Trägerelement bildet zwei Aufnahmekammern aus, die jeweils feuchtigkeitsdicht ausgestaltet sind. In jeder Aufnahmekammer liegt ein Abschnitt eines zugeordneten der Steckkontakte ein. Jede Aufnahmekammer ist somit einem der Steckkontakte zugeordnet und fasst einen Abschnitt des jeweiligen Steckkontakts ein. Die Aufnahmekammern sind feuchtigkeitsdicht voneinander getrennt, indem eine jede Aufnahmekammer einen Innenraum begrenzt, der feuchtigkeitsdicht ausgestaltet ist und somit so nach außen hin abgedichtet ist, dass keine Feuchtigkeit in den Innenraum eindringen kann.

Das Trägerelement ist fest mit dem Gehäuseteil verbunden. Ein Übergang zwischen dem Trägerelement und dem Gehäuseteil kann hierbei feuchtigkeitsdicht abgedichtet sein, sodass keine Feuchtigkeit von außen zwischen dem Gehäuseteil und dem Trägerelement hindurch in das Gehäuseinnere des Steckverbinderteils dringen kann. Die von dem Trägerelement vorstehenden Kontaktabschnitte der Steckkontakte sind durch die Abdichtung zwischen dem Trägerelement und dem Gehäuseteil voneinander elektrisch separiert, indem Feuchtigkeit nicht aus dem Bereich eines Kontaktabschnitts beispielsweise in einer zugeordneten Stecköffnung an dem Steckabschnitt in den Bereich des anderen Kontaktabschnitts in einer anderen, räumlich separierten Stecköffnung des Steckabschnitts gelangen kann.

Dadurch, dass zugeordnete Abschnitte der Steckkontakte in den Aufnahmekammern des Trägerelements feuchtigkeitsdicht aufgenommen sind und somit nach außen hin eingefasst sind, sind die Abschnitte der Steckkontakte an dem Trägerelement funktional voneinander getrennt und elektrisch zueinander isoliert derart, dass auch bei einem eventuellen Eindringen von Feuchtigkeit in das Innere des Gehäuses des Steckverbinderteils kein Spannungsüberschlag oder Kurzschluss entstehen kann. So stellen die Aufnahmekammern in dem Trägerelement Trockenräume zur Verfügung, die zusätzlich im Inneren des Gehäuses des Steckverbinderteils feuchtigkeitsdicht abgedichtet sind derart, dass ein Eindringen von Feuchtigkeit in die Aufnahmekammern unterbunden ist. Selbst wenn jedoch in eine Aufnahmekammer Feuchtigkeit eindringen sollte, besteht die elektrische Separierung weiterhin, zumindest so lange, wie die Feuchtigkeitsdichtheit der anderen Aufnahmekammer nicht beeinträchtigt ist.

In einer Ausgestaltung sind der erste Innenraum und der zweite Innenraum hohlzylindrisch geformt. In dem ersten Innenraum kann ein beispielsweise zylindrischer Schaftabschnitt des ersten Steckkontakts aufgenommen sein, während in dem zweiten Innenraum ein beispielsweise zylindrischer Schaftabschnitt des zweiten Steckkontakts aufgenommen ist.

In einer Ausgestaltung weist jede der ersten Aufnahmekammer und der zweiten Aufnahmekammer eine erste Öffnung auf, durch die der jeweils zugeordnete der zumindest zwei elektrischen Steckkontakte hindurch erstreckt ist. Die Steckkontakte stehen vorzugsweise mit Kontaktabschnitten, zum Beispiel in Form von Kontaktbuchsen, von dem Trägerelement vor und ragen somit aus dem Inneren des Trägerelements heraus nach außen. Abschnitte der Steckkontakte sind in den feuchtigkeitsdichten Aufnahmekammern aufgenommen, wobei durch Öffnungen der Aufnahmekammern die Steckkontakte jeweils nach außen erstreckt sind, um ein steckendes Verbinden der Steckkontakte mit zugeordneten Gegenkontaktelementen des Gegensteckverbinderteils zu ermöglichen.

Die erste Öffnung einer jeden Aufnahmekammer ist vorzugsweise an einem ersten axialen Ende (mit Bezug auf die Steckrichtung, entlang derer das Steckverbinderteil mit dem Gegensteckverbinderteil zu verbinden ist) der Aufnahmekammer geformt, die beispielsweise hin zu einem an dem Gehäuseteil angeordneten Steckabschnitt gewandt ist.

In einer Ausgestaltung ist in der ersten Öffnung einer jeden Aufnahmekammer ein erstes Dichtungselement zum feuchtigkeitsdichten Abdichten eines Übergangs zwischen einem die erste Öffnung begrenzenden Randabschnitt des Trägerelements und dem jeweils zugeordneten der zumindest zwei elektrischen Steckkontakte angeordnet. Durch die erste Öffnung erstreckt sich der zugeordnete Steckkontakt nach außen. Über das erste Dichtungselement ist ein Übergang zwischen dem Steckkontakt und dem die Öffnung begrenzenden Randabschnitt abgedichtet, sodass Feuchtigkeit nicht durch die erste Öffnung hindurch in das Innere der jeweiligen Aufnahmekammer eindringen kann.

Das erste Dichtungselement kann beispielsweise als umlaufender O-Ring geformt sein, der sich um den jeweiligen Steckkontakt herum erstreckt und somit eine umfängliche Abdichtung zwischen dem Steckkontakt und dem umlaufenden Randabschnitt der Öffnung schafft.

In einer Ausgestaltung weist jede der ersten Aufnahmekammer und der zweiten Aufnahmekammer eine zweite Öffnung auf, durch die eine elektrische Lastleitung, die mit dem jeweils zugeordneten der zumindest zwei elektrischen Steckkontakte elektrisch verbunden ist, hindurch erstreckt ist. Die Lastleitung ist beispielsweise in dem durch die Aufnahmekammer eingefassten Innenraum an den zugeordneten Steckkontakt angeschlossen und dazu mit dem in dem Innenraum eingefassten Abschnitt des Steckkontakts elektrisch verbunden, beispielsweise vercrimpt oder verschweißt, insbesondere ultraschallgeschweißt. Die Lastleitung erstreckt sich durch eine zweite Öffnung der jeweiligen Aufnahmekammer hindurch nach außen, sodass die Lastleitung aus dem Innenraum der Aufnahmekammer heraus nach außen geführt ist.

Dadurch, dass die Lastleitung in die Aufnahmekammer eingeführt ist und im Inneren der Aufnahmekammer mit dem zugeordneten Steckkontakt elektrisch verbunden ist, ist ein Anschlussbereich des Steckkontakts, an dem die Verbindung hergestellt ist, feuchtigkeitsdicht im Inneren der Aufnahmekammer eingefasst. Die Lastleitung ist auf ihrem Erstreckungsweg außerhalb der Aufnahmekammer vorzugsweise in einem Leitungsmantel eingefasst und elektrisch isoliert. Zudem sind die Steckkontakte außerhalb des Trägerelements an dem Gehäuseteil aufgenommen und über das Gehäuseteil elektrisch voneinander separiert. Dort, wo die Lastleitungen an die Steckkontakte angeschlossen sind, erfolgt die elektrische Separierung über das Trägerelement, indem solche Abschnitte der Steckkontakte, die Anschlussbereiche zum Anschließen an die Lastleitungen ausbilden, innerhalb der Aufnahmekammern des Trägerelements aufgenommen und eingefasst sind.

Die zweite Öffnung einer jeden Aufnahmekammer ist vorzugsweise an einem zweiten axialen Ende der zugeordneten Aufnahmekammer geformt. Das zweite axiale Ende liegt vorzugsweise von dem ersten axialen Ende ab und weist beispielsweise (mit Bezug auf die Steckrichtung, entlang derer das Steckverbinderteil mit dem Gegensteckverbinderteil zu verbinden ist) von dem an dem Gehäuseteil angeordneten Steckabschnitt weg.

In einer Ausgestaltung ist in der zweiten Öffnung einer jeden Aufnahmekammer ein zweites Dichtungselement zum feuchtigkeitsdichten Abdichten eines Übergangs zwischen einem die zweite Öffnung begrenzenden Randabschnitt des Trägerelements und der Lastleitung angeordnet. Über das zweite Dichtungselement wird somit ein Übergang zwischen der in die Aufnahmekammer hinein erstrecken Lastleitung und dem Trägerelement feuchtigkeitsdicht abgedichtet, sodass auch von Seiten der Lastleitung keine Feuchtigkeit in das Innere der jeweiligen Aufnahmekammer eindringen kann.

Das zweite Dichtungselement kann beispielsweise scheibenförmig mit einer darin geformten Öffnung zum Hindurchführen der Lastleitung geformt sein.

In einer Ausgestaltung weist jede der ersten Aufnahmekammer und der zweiten Aufnahmekammer eine dritte Öffnung auf, in der eine zugeordnete Temperatursensorbaugruppe mit einem Temperatursensorelement der vorangehend beschriebenen Art angeordnet ist. Während eine erste Öffnung zum Hindurchführen des Steckkontakts an einem ersten axialen Ende der jeweiligen Aufnahmekammer und eine zweite Öffnung zum Hindurchführen einer Lastleitung an einem zweiten axialen Ende der jeweiligen Aufnahmekammer geformt sein kann, ist die dritte Öffnung beispielsweise im Bereich einer die Aufnahmekammer umgebenden, zum Beispiel zylindrischen Mantelfläche geformt und ist somit axial zwischen der ersten Öffnung und der zweiten Öffnung angeordnet. In der dritten Öffnung ist eine Temperatursensorbaugruppe aufgenommen, über die eine Temperatur an dem jeweils zugeordneten Steckkontakt im Inneren der Aufnahmekammer gemessen werden kann.

Jeder der Steckkontakte ist hierbei axial über das zugeordnete Temperatursensorelement in der zugeordneten Aufnahmekammer fixiert.

In einer Ausgestaltung weist die jeweilige Temperatursensorbaugruppe ein drittes Dichtungselement zum feuchtigkeitsdichten Abdichten eines Übergangs zwischen einem die dritte Öffnung begrenzenden Randabschnitt des Trägerelements und dem Temperatursensorelement auf. Das Temperatursensorelement liegt somit feuchtigkeitsdicht in der zugeordneten, dritten Öffnung der jeweiligen Aufnahmekammer ein und ist über das dritte Dichtungselement relativ zu dem Trägerelement abgedichtet, sodass keine Feuchtigkeit durch die dritte Öffnung hindurch in das Innere der Aufnahmekammer eindringen kann.

Ein Ladesystem zum Aufladen eines Elektrofahrzeugs umfasst ein Steckverbinderteil der vorangehend beschriebenen Art. Ein solches Ladesystem umfasst zudem ein Gegensteckverbinderteil, das steckend mit dem Steckverbinderteil verbunden werden kann. Das Steckverbinderteil kann beispielsweise einen Ladestecker verwirklichen, der an einem Ladekabel angeordnet ist. Das Gegensteckverbinderteil kann demgegenüber beispielsweise als Ladebuchse an dem Elektrofahrzeug angeordnet sein und mit dem Steckverbinderteil in Form des Ladesteckers verbunden werden kann. Über das Ladekabel kann der Ladestecker beispielsweise an eine Ladestation angeschlossen sein, sodass in verbundener Stellung des Steckverbinderteils und des Gegensteckverbinderteils Ladeströme von der Ladestation zum Elektrofahrzeug übertragen werden können.

Denkbar ist aber auch, dass das Steckverbinderteil eine Ladebuchse auf Seiten eines Elektrofahrzeugs verwirklicht.

Ein Steckverbinderteil der hier beschriebenen Art kann insbesondere zum Übertragen von Ladeströmen in Form von Gleichströmen eingesetzt werden. Ein solches Steckverbinderteil kann aber auch zum Übertragen von Ladeströmen in Form von Wechselströmen dienen.

Der der Erfindung zugrunde liegende Gedanke soll nachfolgend anhand der in den Figuren dargestellten Ausführungsbeispiele näher erläutert werden. Es zeigen:
- Fig. 1: eine Ansicht einer Ladestation mit einem daran angeordneten Ladekabel zum Verbinden mit einem Elektrofahrzeug;
- Fig. 2: eine Ansicht eines Ausführungsbeispiels eines Steckverbinderteils in Form eines Ladesteckers;
- Fig. 3: eine Ansicht eines Gehäuseteils eines Steckverbinderteils mit einem daran angeordneten Trägerelement zum Tragen von Lastkontakte verwirklichenden Steckkontakten;
- Fig. 4: eine Ansicht einer Baugruppe umfassend das Trägerelement;
- Fig. 5: eine Teilexplosionsansicht der Baugruppe;
- Fig. 6: eine stirnseitige Ansicht der Baugruppe;
- Fig. 7: eine Draufsicht auf die Baugruppe;
- Fig. 8A: eine andere stirnseitige Ansicht der Baugruppe;
- Fig. 8B: eine Schnittansicht entlang der Linie D-D gemäß Fig. 8A;
- Fig. 9A: eine Seitenansicht der Baugruppe;
- Fig. 9B: eine Schnittansicht entlang der Linie E-E gemäß Fig. 9A;
- Fig. 10: eine gesonderte Ansicht des Trägerelements;
- Fig. 11: eine andere Ansicht des Trägerelements;
- Fig. 12: eine stirnseitige Ansicht des Trägerelements;
- Fig. 13: eine andere stirnseitige Ansicht des Trägerelements;
- Fig. 14A: eine Seitenansicht der Anordnung gemäß Fig. 5;
- Fig. 14B: eine Schnittansicht entlang der Linie D-D gemäß Fig. 14A;
- Fig. 15A: die Seitenansicht gemäß Fig. 9A;
- Fig. 15B: eine Schnittansicht entlang der Linie B-B gemäß Fig. 15A;
- Fig. 16A: die Schnittansicht gemäß Fig. 8B; und
- Fig. 16B: eine ausschnittsweise vergrößerte Ansicht der Schnittansicht gemäß Fig. 16A.

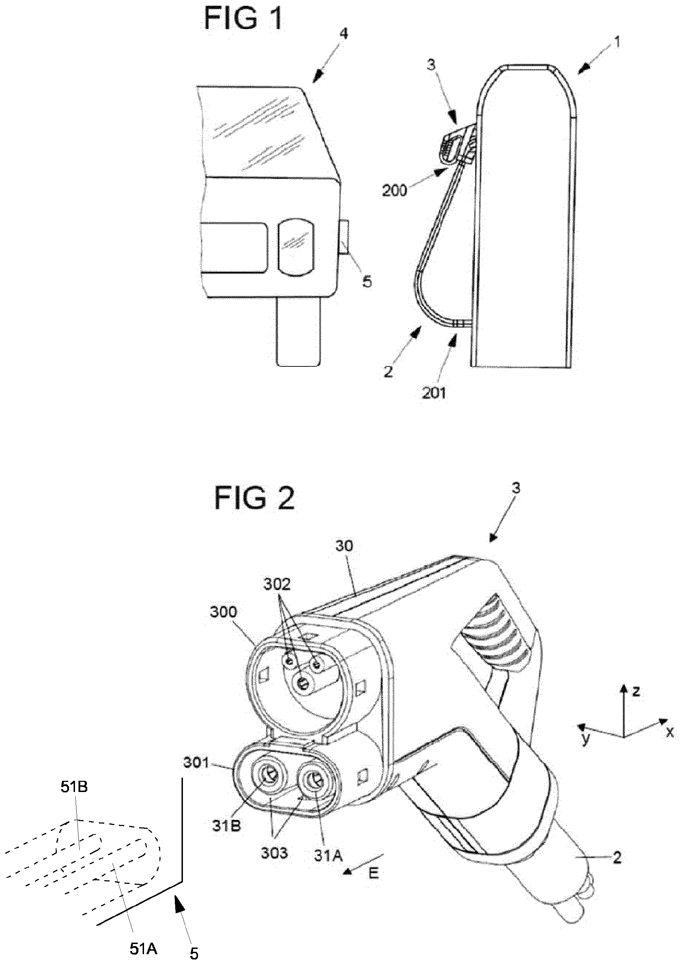

Fig. 1 zeigt ein Ladesystem umfassend eine Ladestation 1, die zum Aufladen eines elektrisch angetriebenen Fahrzeugs 4, auch bezeichnet als Elektrofahrzeug, dient. Die Ladestation 1 ist dazu ausgestaltet, einen Ladestrom in Form eines Wechselstroms oder eines Gleichstroms zur Verfügung zu stellen und weist ein Kabel 2 auf, das mit einem Ende 201 mit der Ladestation 1 und mit einem anderen Ende 200 mit einem Steckverbinderteil 3 in Form eines Ladesteckers verbunden ist.

Wie aus der vergrößerten Ansicht gemäß Fig. 2 ersichtlich, weist das Steckverbinderteil 3 an einem Gehäuse 30 Steckabschnitte 300, 301 auf, mit denen das Steckverbinderteil 3 steckend mit einem zugeordneten Gegensteckverbinderteil 5 in Form einer Ladebuchse an dem Fahrzeug 4 in Eingriff gebracht werden kann. Auf diese Weise kann die Ladestation 1 elektrisch mit dem Fahrzeug 4 verbunden werden, um Ladeströme von der Ladestation 1 hin zu dem Fahrzeug 4 zu übertragen.

Um ein zügiges Aufladen des Elektrofahrzeugs 4 z.B. im Rahmen eines sogenannten Schnellladevorgangs zu ermöglichen, weisen die übertragenen Ladeströme eine große Stromstärke, z.B. größer als 150 A, gegebenenfalls sogar in der Größenordnung von 500A oder gar 700 A oder darüber, auf.

Bei dem Steckverbinderteil 3 in Form des Ladesteckers gemäß Fig. 2 sind an dem oberen Steckabschnitt 300 an Steckdomen 302 Steckkontakte angeordnet, die zum Beispiel zum Übertragen von Steuersignalen oder als Erdungskontakt dienen. An dem unteren Steckabschnitt 301 sind an Steckdomen 303 demgegenüber Steckkontakte 31A, 31B angeordnet, die als Lastkontakte zum Übertragen eines Ladestroms in Form eines Gleichstroms dienen. Bei steckendem Verbinden mit dem zugeordneten Gegensteckverbinderteil 5 in Form der Ladebuchse auf Seiten des Elektrofahrzeugs 4 gelangen die Steckkontakte 31A, 31B mit zugeordneten Gegenkontaktelementen 51A, 51B auf Seiten der Ladebuchse 5 in elektrischen Kontakt, sodass ein Ladestrom von der Ladestation 1 zum Elektrofahrzeug 4 übertragen werden kann.

Weil im Betrieb an den Lastkontakte verwirklichenden Steckkontakten 31A, 31B hohe Spannungen anliegen können, ist dafür Sorge zu tragen, dass es zwischen den Steckkontakten 31A, 31B und mit den Steckkontakten 31A, 31B elektrisch verbundenen, stromführenden Bauteilen nicht zu einem Spannungsüberschlag oder einem Kurzschluss kommen kann. Hierzu ist insbesondere zu verhindern, dass Feuchtigkeit im Inneren des (gegebenenfalls nach außen hin nicht abgedichteten) Gehäuses 30 zu einer Beeinträchtigung der elektrischen Separierung der Steckkontakte 31A, 31B und der den Steckkontakten 31A, 31B zugeordneten stromführenden Bauteilen voneinander innerhalb des Gehäuses 30 führen könnte.

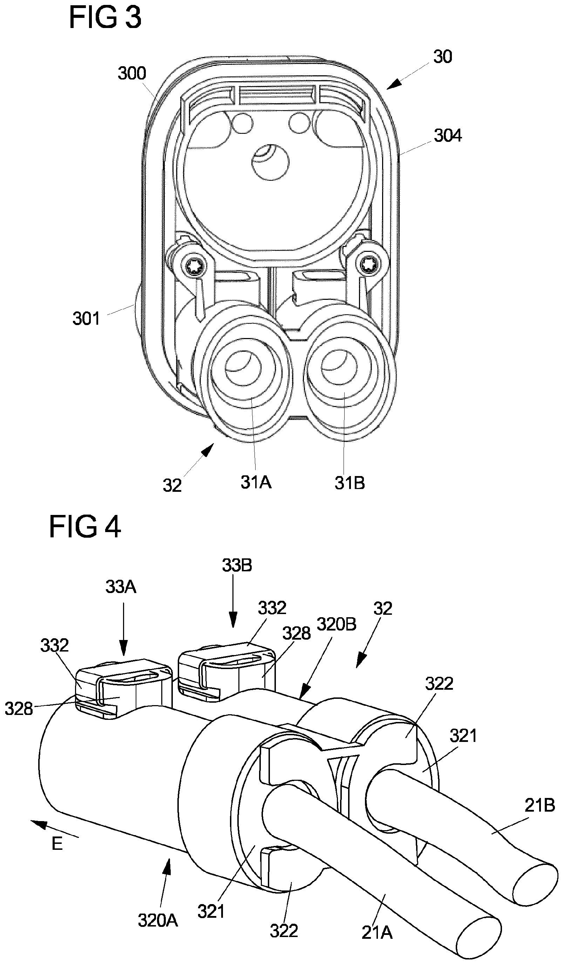

Bei dem dargestellten Ausführungsbeispiel sind die Steckkontakte 31A, 31B an einem Trägerelement 32 angeordnet, das fest mit einem Gehäuseteil 304 des Gehäuses 30 des Steckverbinderteils 3 verbunden ist, wie dies aus Fig. 3 ersichtlich ist. Durch das Trägerelement 32 sind die Steckkontakte 31A, 31B an dem Gehäuseteil 304 und somit an dem unteren Steckabschnitt 301, der an dem Gehäuseteil 304 geformt ist, positioniert und fixiert.

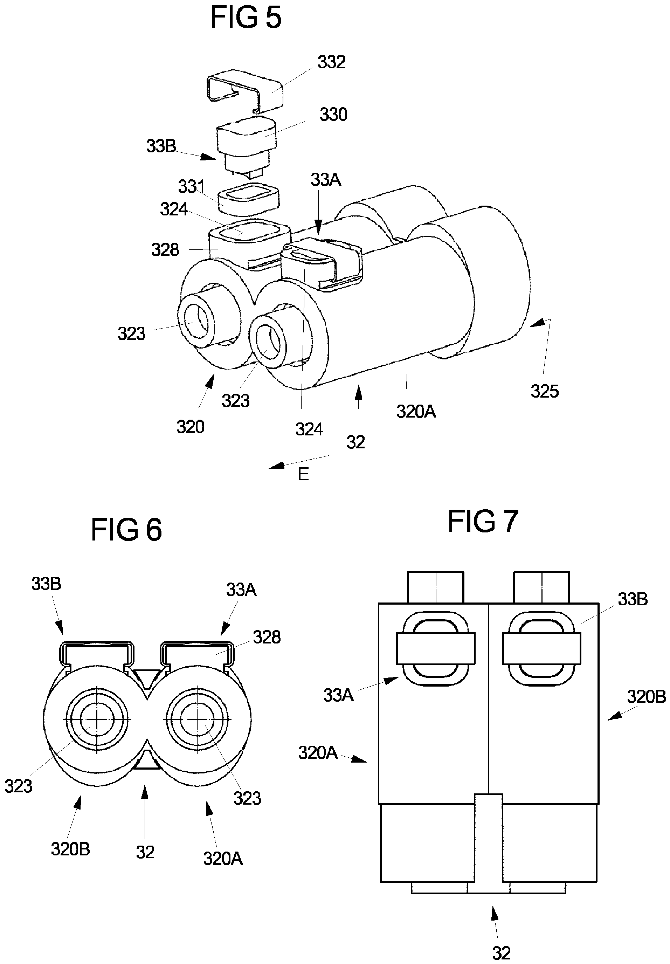

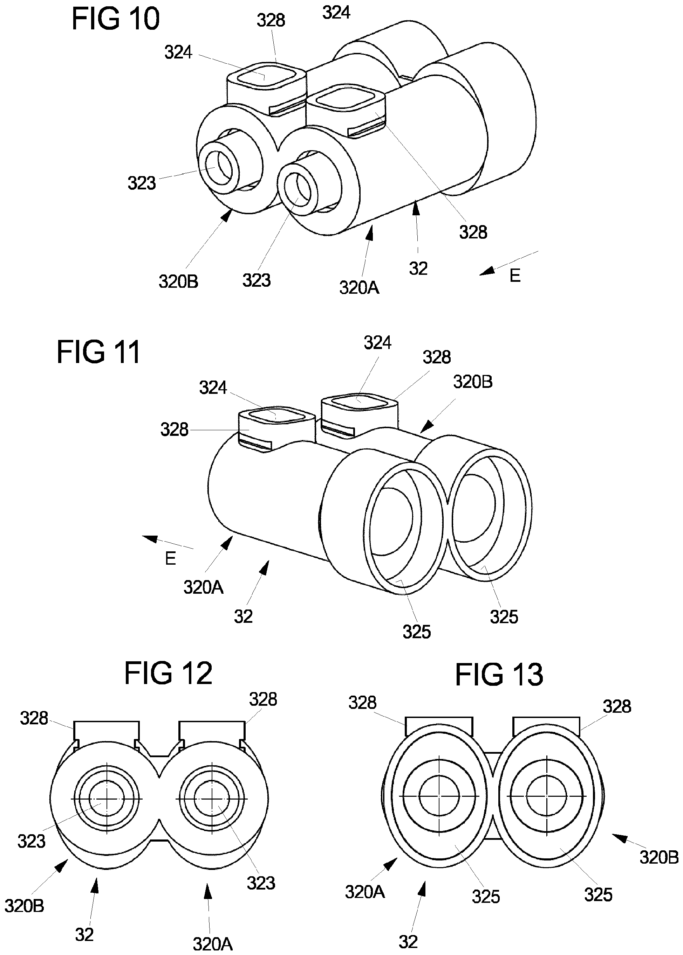

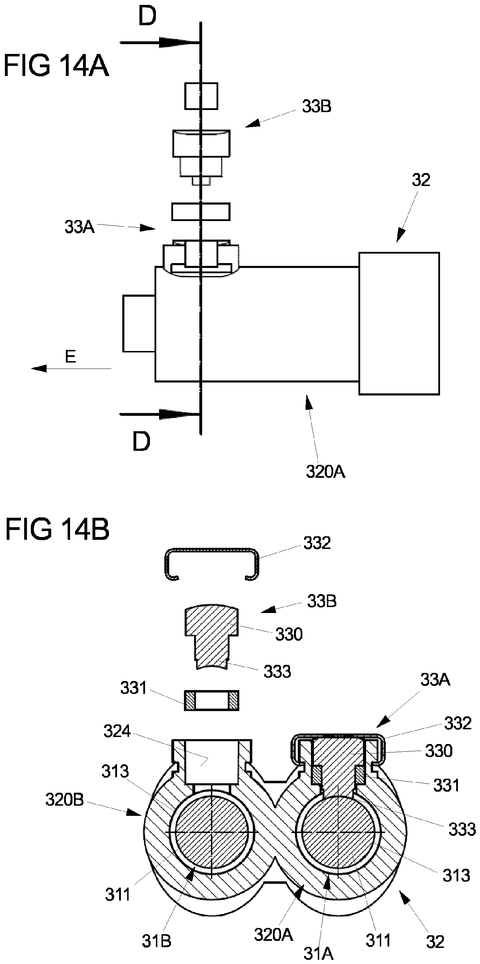

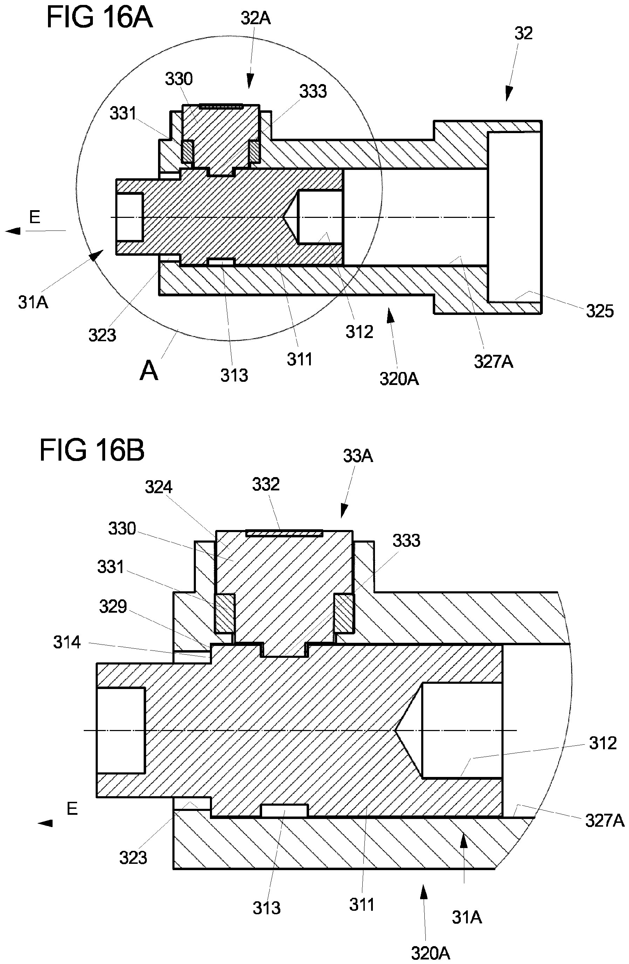

Wie aus Fig. 4 bis 16A, 16B ersichtlich, die das Trägerelement 32 mit und ohne die Steckkontakte 31A, 31B in unterschiedlichen Ansichten zeigen, bildet das Trägerelement 32 zwei Aufnahmekammern 320A, 320B aus, die jeweils einen Innenraum 327A, 327B einfassen. Die Aufnahmekammern 320A, 320B weisen jeweils eine zylindrische Grundform auf und sind, betrachtet entlang einer zur Steckrichtung E quer erstreckten Querrichtung, nebeneinander an dem Trägerelement 32 geformt.

Entsprechend der Formgebung der Aufnahmekammern 320A, 320B sind die von den Aufnahmekammern 320A, 320B eingefassten Innenräume 327A, 327B hohlzylindrisch geformt.

In einer jeden Aufnahmekammer 320A, 320B ist ein Steckkontakt 31A, 31B aufgenommen. Der jeweilige Steckkontakt 31A, 31B liegt hierbei mit einem zylindrischen Schaftabschnitt 311 in der jeweils zugeordneten Aufnahmekammer 320A, 320B ein und ist mit dem Schaftabschnitt 311 feuchtigkeitsdicht in dem Innenraum 327A, 327B aufgenommen.

Ein jeder Steckkontakt 31A, 31B erstreckt sich durch eine erste Öffnung 323 der zugeordneten Aufnahmekammer 320A, 320B nach außen und steht mit einem Kontaktabschnitt 310, zum Beispiel in Form einer Kontaktbuchse, von dem Trägerelement 32 in Richtung des Steckabschnitts 301 des Gehäuseteils 304 vor derart, dass die Kontaktabschnitte 310 in den Steckdomen 303 im Bereich des Steckabschnitts 301 einliegen und somit zum steckenden Verbinden mit den zugeordneten Gegenkontakten 51A, 51B des Gegensteckverbinderteils 5 von außen zugänglich sind.

In einer jeden Öffnung 323 ist ein Dichtungselement 326 in Form eines um die Steckrichtung E umlaufenden O-Rings angeordnet, der einen Übergang zwischen dem jeweiligen Steckkontakt 31A, 31B und einem die Öffnung 323 begrenzenden Randabschnitt des Trägerelements 32 feuchtigkeitsdicht abdichtet, sodass keine Feuchtigkeit von außen durch die Öffnung 323 in das Innere der jeweiligen Aufnahmekammer 320A, 320B gelangen kann.

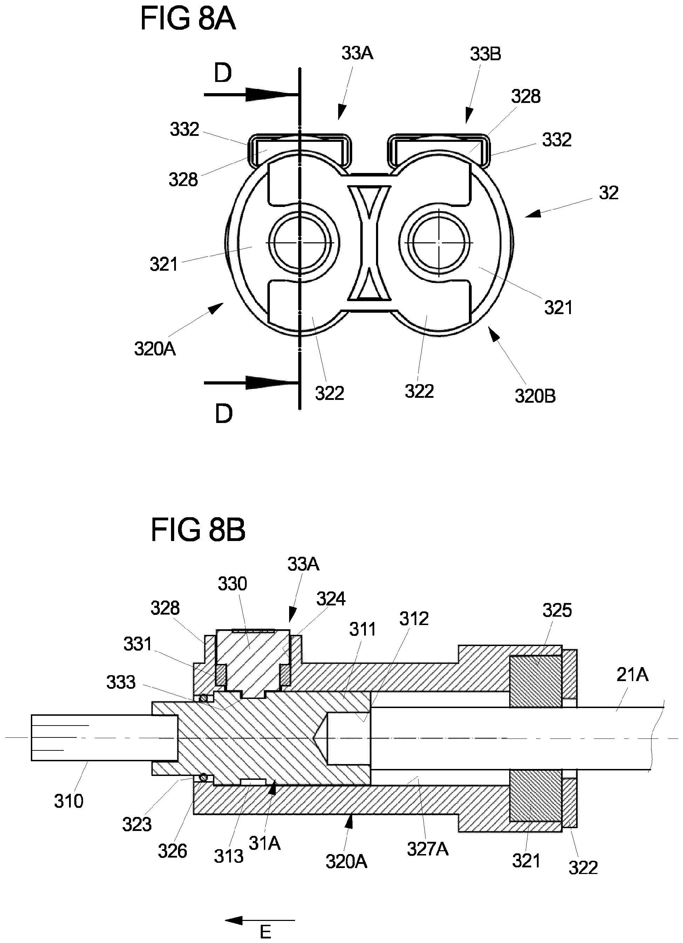

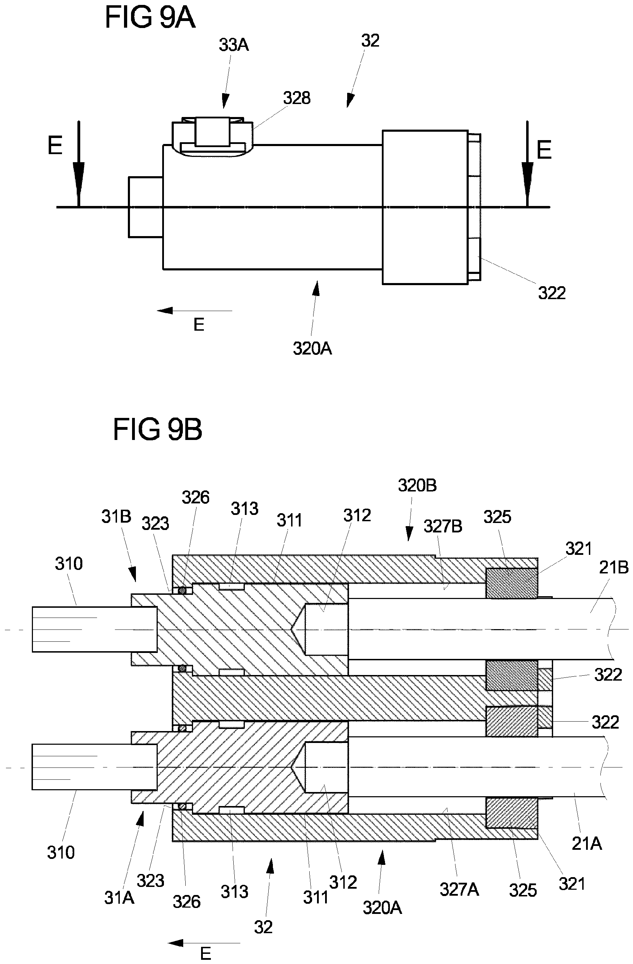

Die Schaftabschnitte 311 der Steckkontakte 31A, 31B, die im Inneren der Aufnahmekammern 320A, 320B aufgenommen sind, bilden Anschlussabschnitte 312 aus, an die Lastleitungen 21A, 21B angeschlossen sind, wie dies insbesondere aus den Schnittansichten gemäß Fig. 8B und 9B ersichtlich ist. Ein jeder Steckkontakt 31A, 31B ist somit in der zugeordneten Aufnahmekammer 320A, 320B mit einer zugeordneten Lastleitung 21A, 21B verbunden. Die jeweilige Lastleitung 21A, 21B erstreckt sich durch ein Dichtungselement 321 in einer zweiten Öffnung 325 der zugeordneten Aufnahmekammer 320A, 320B hindurch und aus der jeweiligen Aufnahmekammer 320A, 320B heraus, sodass die Lastleitung 21A, 21B aus der jeweiligen Aufnahmekammer 320A, 320B nach außen geführt ist.

Über das Dichtungselement 321, das scheibenförmig mit einer darin geformten Öffnung zum Hindurchführen der jeweiligen Lastleitung 21A, 21B geformt ist, ist ein Übergang zwischen der Lastleitung 21A, 21B und einem die Öffnung 325 begrenzenden Randabschnitt des Trägerelements 32 feuchtigkeitsdicht abgedichtet, sodass durch die Öffnung 325 keine Feuchtigkeit in das Innere der jeweiligen Aufnahmekammer 320A, 320B eindringen kann.

Die zweite Öffnung 325 einer jeweiligen Aufnahmekammer 320A, 320B ist an einem axialen Ende der Aufnahmekammer 320A, 320B geformt, das von dem Gehäuseteil 304 abliegt. Die erste Öffnung 323 ist demgegenüber an einem axialen Ende der jeweiligen Aufnahmekammer 320A, 320B geformt, die dem Gehäuseteil 304 zugewandt ist.

Die Dichtungselemente 321 sind in die Öffnungen 325 der Aufnahmekammern 320A, 320B eingesetzt und über Befestigungselemente 322 an dem Trägerelement 32 in Position gesichert.

An einer jeden Aufnahmekammer 320A, 320B ist ein radial nach außen vorstehender Gehäuseabschnitt 328 geformt, innerhalb dessen eine Öffnung 324 geformt ist, in der eine Temperatursensorbaugruppe 33A, 33B aufgenommen ist. Eine jede Temperatursensorbaugruppe 33A, 33B weist ein Temperatursensorelement 330 und ein Dichtungselement 331 auf, die gemeinsam über ein Fixierungselement 332 in Form eines bügelförmigen Befestigungsclips mit dem Gehäuseabschnitt 328 und somit mit dem Trägerelement 32 verbunden sind.

Einem jeden Steckkontakt 31A, 31B in einer jeden Aufnahmekammer 320A, 320B ist eine Temperatursensorbaugruppe 33A, 33B zugeordnet, über die die Temperatur an dem jeweiligen Steckkontakt 31A, 31B gemessen und somit im Betrieb überwacht werden kann. Das in der durch den Gehäuseabschnitt 328 begrenzten Öffnung 324 einliegende Temperatursensorelement 330 steht in mechanischem Kontakt mit dem jeweils zugeordneten Steckkontakt 31A, 31B, sodass über das Temperatursensorelement 330, beispielsweise in Form eines temperatursensitiven elektrischen Widerstands (Heißleiter (NTC) oder Kaltleiter (PTC)), die Temperatur an dem jeweils zugeordneten Steckkontakt 31A, 31B aufgenommen werden kann.

Über das Dichtungselement 331 ist ein Übergang zwischen dem Temperatursensorelement 330 und dem Gehäuseabschnitt 328 feuchtigkeitsdicht abgedichtet, sodass keine Feuchtigkeit von außen durch die Öffnung 324 in den Innenraum 327A, 327B der jeweiligen Aufnahmekammer 320A, 320B eindringen kann.

Ein jedes Temperatursensorelement 330 bildet einen Eingriffsabschnitt 333 in Form eines radial nach innen vorspringenden Vorsprungs aus, der formschlüssig mit einem zugeordneten Eingriffsabschnitt 313 in Form einer radial nach innen in den zylindrischen Schaftabschnitt 311 des zugeordneten Steckkontakts 31A, 31B eingeformten, umlaufenden Nut eingreift. Aufgrund des Formschlusses ist der jeweilige Steckkontakt 31A, 31B axial in der Aufnahmekammer 320A, 320B und somit relativ zu dem Trägerelement 32 fixiert, sodass der jeweilige Steckkontakt 31A, 31B mechanisch relativ zu dem Trägerelement 32 festgelegt ist.

Der Formschluss ist hierbei insbesondere derart, dass axial entlang der Steckrichtung E bei einem Steckvorgang wirkende Druck- und/oder Zugkräfte aufgenommen und abgeleitet werden können. Durch den über die Temperatursensorbaugruppe 33A, 33B hergestellten Formschluss wird somit die mechanische Fixierung der Steckkontakte 31A, 31B an dem Trägerelement 32 hergestellt.

Das Temperatursensorelement 330 ist zum Beispiel elektrisch dadurch gegenüber dem zugeordneten Steckkontakt 31A, 31B isoliert, dass das Temperatursensorelement 330 durch ein elektrisch isolierendes Material umspritzt und somit elektrisch isolierend eingehüllt ist. Das Temperatursensorelement 330 liegt hierbei unmittelbar an dem Steckkontakt 31A, 31B an und kann somit effizient eine Temperatur an dem jeweils zugeordneten Steckkontakt 31A, 31B erfassen.

Datenleitungen zum Übertragen eines Sensorsignals, zum Beispiel zum Verbinden des Temperatursensorelements 330 mit einer Steuereinheit, können beispielsweise außerhalb der Öffnung 324 an das Temperatursensorelement 330 angeschlossen sein.

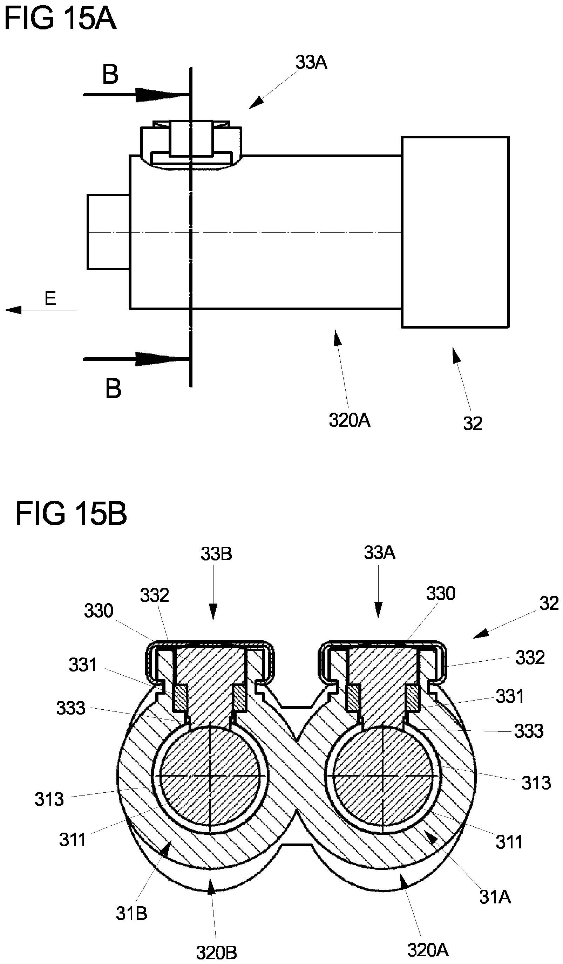

Wie dies aus der vergrößerten Schnittansicht gemäß Fig. 16B und zudem aus der Schnittansicht gemäß Fig. 15B ersichtlich ist, liegen die durch Vorsprünge gebildeten Eingriffsabschnitte 333 der Temperatursensorelemente 330 der Temperatursensorbaugruppe 33A, 33B in zugeordneten, nutförmigen, umlaufenden Vertiefungen an dem Schaftabschnitt 311 des jeweils zugeordneten Steckkontakts 31A, 31B ein und stellen dadurch eine axiale, mechanische Sicherung an dem Steckkontakt 31A, 31B her. Insbesondere ist aufgrund des formschlüssigen Eingriffs ein jeder Steckkontakt 31A, 31B axial so relativ zu dem Trägerelement 2 30 festgelegt, dass Druck- und/oder Zugkräfte aufgenommen und abgeleitet werden können und nicht zu einer Positionsänderung der Steckkontakte 31A, 31B relativ zu dem Trägerelement 32 führen können.

Wie dies aus der vergrößerten Schnittansicht gemäß Fig. 16B ersichtlich ist, liegt der Schaftabschnitt 311 eines jeden Steckkontakts 31A, 31B mit einem durch eine Schulter ausgebildeten Anlageabschnitt 314 an einem zugeordneten Stützabschnitt 329 an dem axialen Ende der jeweiligen Aufnahmekammer 320A, 320B an, an dem die Öffnung 323 gebildet ist. Über die abstützende Anlage des Anlageabschnitts 314 an dem Stützabschnitt 329 wird der jeweilige Steckkontakt 31A, 31B so relativ zu dem Trägerelement 32 abgestützt, dass an dem Steckkontakt 31A, 31B wirkende Zugkräfte, beispielsweise bei einem Zugvorgang zum Trennen der Steckverbindung, sowohl über den Eingriff des Temperatursensorelements 330 mit dem Schaftabschnitt 311 als auch durch die abstützende Anlage des Anlageabschnitts 314 mit dem Stützabschnitt 329 aufgenommen und abgeleitet werden können und somit auch Zugbelastungen nicht zu einer Positionsänderung der Steckkontakte 31A, 31B führen können.

Die Aufnahmekammern 320A, 320B schaffen voneinander separierte Innenräume 320A, 320B, in denen die Schaftabschnitte 311 der Steckkontakte 31A, 31B getrennt voneinander aufgenommen sind. Aufgrund der feuchtigkeitsdichten Ausgestaltung der Aufnahmeräume 320A, 320B kann Feuchtigkeit nicht in das Innere der Aufnahmekammern 320A, 320B eindringen, sodass insbesondere die Anschlussbereiche 312 der Steckkontakte 31A, 31B, an die die Lastleitungen 21A, 21B angeschlossen sind, feuchtigkeitsdicht im Inneren der Aufnahmeräume 320A, 320B aufgenommen sind.

Das Trägerelement 32 ist vorzugsweise feuchtigkeitsdicht zu dem Gehäuseteil 304 abgedichtet derart, dass die in die Steckdome 303 ragenden Kontaktabschnitte 310 der Steckkontakte 31A, 31B an dem Gehäuseteil 304 räumlich voneinander separiert und feuchtigkeitsdicht voneinander getrennt sind.

Der der Erfindung zugrunde liegende Gedanke ist nicht auf die vorangehend beschriebenen Ausführungsbeispiele beschränkt, sondern kann auch in anderer Weise verwirklicht werden.

Ein Steckverbinderteil der hier in Rede stehenden Art kann einen Ladestecker zum Beispiel an einem Ladekabel oder eine Ladebuchse zum Beispiel auf Seiten eines Elektrofahrzeugs verwirklichen.

Ein solches Steckverbinderteil kann insbesondere zum Übertragen eines Ladestroms in Form eines Gleichstroms dienen. Denkbar ist aber auch, dass das Steckverbinderteil zum Übertragen eines Ladestroms in Form eines Wechselstroms ausgestaltet ist.

### Bezugszeichenliste

- 1: Ladestation
- 2: Ladekabel
- 200,201: Ende
- 21A, 21B: Lastleitung
- 3: Ladestecker
- 30: Gehäuse
- 300, 301: Steckabschnitt
- 302,303: Steckdom
- 304: Gehäuseteil
- 31A, 31B: Steckkontakt
- 310: Kontaktabschnitt
- 311: Schaftabschnitt
- 312: Anschlussabschnitt
- 313: Eingriffsabschnitt
- 314: Anschlagabschnitt
- 32: Trägerelement
- 320A, 320B: Aufnahmekammer
- 321: Dichtungselement
- 322: Befestigungselement
- 323: Öffnung
- 324: Öffnung
- 325: Öffnung
- 326: Dichtungselement
- 327A, 327B: Innenraum
- 328: Gehäuseabschnitt
- 329: Stützabschnitt
- 33A, 33B: Temperatursensorbaugruppe
- 330: Temperatursensorelement
- 331: Dichtungselement
- 332: Fixierungselement
- 333: Eingriffsabschnitt
- 4: Fahrzeug
- 5: Ladebuchse
- 51A, 51B: Gegenkontakte
- E: Steckrichtung
- X: Längsrichtung
- Y: Querrichtung
- Z: Höhenrichtung

## Patentansprüche

1. Steckverbinderteil (3) eines Ladesystems zum Aufladen eines Elektrofahrzeugs (4), wobei das Steckverbinderteil (3) entlang einer Steckrichtung (E) mit einem Gegensteckverbinderteil (5) steckend verbindbar ist, mit
einem Gehäuseteil (304),
einem mit dem Gehäuseteil (304) verbundenen Trägerelement (32),
zumindest einem an dem Trägerelement (32) angeordneten elektrischen Steckkontakt (31A, 31B) zum steckenden Verbinden mit einem Gegenkontakt (51A, 51B) des Gegensteckverbinderteils (5) und
einer an dem Trägerelement (12) angeordneten Temperatursensorbaugruppe (33A, 33B), die ein mit dem zumindest einen elektrischen Steckkontakt (31A, 31B) in Wirkverbindung stehendes Temperatursensorelement (330) zum Messen einer Temperatur an dem zumindest einen elektrischen Steckkontakt (31A, 31B) aufweist,
**dadurch gekennzeichnet, dass** das Temperatursensorelement (330) einen ersten Eingriffsabschnitt (333) aufweist, der formschlüssig mit einem zweiten Eingriffsabschnitt (313) des zumindest einen elektrischen Steckkontakts (31A, 31B) in Eingriff steht, sodass der zumindest eine elektrische Steckkontakt (31A, 31B) axial entlang der Steckrichtung (E) relativ zu dem Trägerelement (32) festgelegt ist.

2. Steckverbinderteil (3) nach Anspruch 1, **dadurch gekennzeichnet, dass** das Temperatursensorelement (330) in einer Öffnung (324) des Trägerelements (32) angeordnet ist.

3. Steckverbinderteil (3) nach Anspruch 2, **dadurch gekennzeichnet, dass** die Temperatursensorbaugruppe (33A, 33B) ein Dichtungselement (331) zum feuchtigkeitsdichten Abdichten eines Übergangs zwischen einem die Öffnung (324) begrenzenden Randabschnitt des Trägerelements (32) und dem Temperatursensorelement (330) aufweist.

4. Steckverbinderteil (3) nach einem der Ansprüche 1 bis 3, **dadurch gekennzeichnet, dass** das Trägerelement (32) zumindest eine Aufnahmekammer (320A, 320B) aufweist, in der ein Abschnitt (311) des zumindest einen elektrischen Steckkontakts (31A, 31B) aufgenommen ist.

5. Steckverbinderteil (3) nach Anspruch 4, **dadurch gekennzeichnet, dass** die zumindest eine Aufnahmekammer (320A) einen feuchtigkeitsdichten Innenraum (327A, 327B) begrenzt, in dem der Abschnitt (311) des zumindest einen elektrischen Steckkontakts (31A, 31B) aufgenommen ist.

6. Steckverbinderteil (3) nach einem der vorangehenden Ansprüche, **dadurch gekennzeichnet, dass** der erste Eingriffsabschnitt (333) durch einen Vorsprung des Temperatursensorelements (330) und der zweite Eingriffsabschnitt (313) durch eine Vertiefung an dem zumindest einen elektrischen Steckkontakt (31A, 31B) geformt ist.

7. Steckverbinderteil (3) nach einem der vorangehenden Ansprüche, **dadurch gekennzeichnet, dass** der zumindest eine elektrische Steckkontakt (31A, 31B) einen Anschlagabschnitt (314) aufweist, der zur axialen Abstützung an einem Stützabschnitt (329) des Trägerelements (32) anliegt.

8. Steckverbinderteil (3) nach einem der vorangehenden Ansprüche, **gekennzeichnet durch** zumindest zwei an dem Trägerelement (32) angeordnete elektrische Steckkontakte (31A, 31B) zum steckenden Verbinden mit Gegenkontakten (51A, 51B) des Gegensteckverbinderteils (5).

9. Steckverbinderteil (3) nach Anspruch 8, **dadurch gekennzeichnet, dass** die zumindest zwei Steckkontakte (31A, 31B) entlang der Steckrichtung (E) von dem Trägerelement (32) abstehen.

10. Steckverbinderteil (3) nach Anspruch 8 oder 9, **dadurch gekennzeichnet, dass** an dem Gehäuseteil (304) ein Steckabschnitt (300, 301) zum steckenden Verbinden mit dem Gegensteckverbinderteil (5) angeordnet ist, wobei die zumindest zwei Steckkontakte (31A, 31B) jeweils einen Kontaktabschnitt (310) zum elektrischen Kontaktieren mit einem zugeordneten Gegenkontakt (51A, 51B) des Gegensteckverbinderteils (5) aufweisen, der im Bereich des Steckabschnitts (31A, 31B) angeordnet ist.

11. Steckverbinderteil (3) nach einem der Ansprüche 8 bis 10, **dadurch gekennzeichnet, dass** das Trägerelement (32) eine erste Aufnahmekammer (320A), in der ein Abschnitt (311) eines ersten der zumindest zwei elektrischen Steckkontakte (31A, 31B) aufgenommen ist, und eine zweite Aufnahmekammer (320B), in der ein Abschnitt (311) eines zweiten der zumindest zwei elektrischen Steckkontakte (31A, 31B) aufgenommen ist, aufweist, wobei die erste Aufnahmekammer (320A) einen ersten feuchtigkeitsdichten Innenraum (327A) begrenzt, in dem der Abschnitt (311) des ersten der zumindest zwei elektrischen Steckkontakte (31A, 31B) aufgenommen ist, und die zweite Aufnahmekammer (320B) einen zweiten feuchtigkeitsdichten Innenraum (327B) begrenzt, in dem der Abschnitt (311) des zweiten der zumindest zwei elektrischen Steckkontakte (31A, 31B) aufgenommen ist.

12. Steckverbinderteil (3) nach Anspruch 11, **dadurch gekennzeichnet, dass** der erste Innenraum (327A) und der zweite Innenraum (327) hohlzylindrisch geformt sind.

13. Steckverbinderteil (3) nach Anspruch 11 oder 12, **dadurch gekennzeichnet, dass** jede der ersten Aufnahmekammer (320A) und der zweiten Aufnahmekammer (320B) eine erste Öffnung (323) aufweist, durch die der jeweils zugeordnete der zumindest zwei elektrischen Steckkontakte (31A, 31B) hindurch erstreckt ist.

14. Steckverbinderteil (3) nach Anspruch 13, **dadurch gekennzeichnet, dass** die erste Öffnung (323) an einem ersten axialen Ende der zugeordneten Aufnahmekammer (320A, 320B) geformt ist.

15. Ladesystem zum Aufladen eines Elektrofahrzeugs (4), mit einem Steckverbinderteil (3) nach einem der vorangehenden Ansprüche.
